# EUROPÄISCHE PATENTSCHRIFT

(11) **EP 0 955 152 B1**
(45) Veröffentlichungstag und Bekanntmachung des Hinweises auf die Patenterteilung: **16.06.2004**
(21) Anmeldenummer: 99810378.2
(22) Anmeldetag: 04.05.1999
(51) Int. Cl.: B29D 23/20, B65D 35/22

(54) **Verfahren zur Herstellung einer Mehrkammer-Verpackungstube**
Process for making a multi-compartment packaging tube
Procédé de fabrication d'un tube d'emballage à plusieurs compartiments

(30) Priorität: 07.05.1998 CH 102898
(43) Veröffentlichungstag der Anmeldung: 10.11.1999
(73) Patentinhaber: KMK LIZENCE LTD., Chaussée, Port Louis (MU)
(72) Erfinder: Scheifele, Fredy, 8340 Hinwil (CH)
(74) Vertreter: Peege, Klaus

(56) Entgegenhaltungen:
- EP-A- 0 867 374
- DE-C- 19 640 833
- FR-A- 961 154
- US-A- 3 081 926
- US-A- 3 227 319
- US-A- 3 948 704
- US-A- 5 076 470

## Beschreibung

Die Erfindung betrifft ein Verfahren zur Herstellung einer Mehrkammer-Verpackungstube nach dem Oberbegriff des Patentanspruches 1.

Mehrkammer-Verpackungstuben sind Tuben mit mindestens einer in ihnen aufgenommenen Trennwand zur Aufnahme bis zur ihrer Entnahme getrennt zu haltender Verpackungsgüter, z.B. Komponenten eines Gebrauchsgutes, die erst bei Gebrauch zur Vereinigung gelangen sollen. Gebrauchsgüter dieser Art treten auf dem Gebiet der Technik, Hygiene, Kosmetik und Pharmazie vermehrt in den Vordergrund.

Verfahren zur Herstellung von Mehrkammertuben sind bekannt. Grundsätzlich sind die bekannten Verfahren in zwei Arten und zwar in Montageverfahren (assembler processes) und Formungsverfahren (forming process) unterschieden. Der Unterschied der Verfahren liegt darin, dass beim Montageverfahren Tuben mit Trennwänden aus Einzelteilen zusammengesetzt werden, während beim Formungsverfahren Tubenrohr mit Trennwand oder Kopf mit Trennwand (also immer mindestens zwei Tubenkomponenten) in einem Arbeitsgang gebildet und anschliessend, z.B. Tubenrohr und Trennwand mit Kopf oder Kopf und Trennwand mit Tubenrohr, vereinigt werden.

Bekannt ist ein Montageverfahren, bei dem ein vorgefertigtes Tubenrohr mit einem gleichermassen vorgefertigten Tubenkopf verbunden wird. Anschliessend wird eine faltenförmig ausgebildete, in ihrer Längs- und Querrichtung federnde Trennwand in das Tubenrohr eingeschoben. Wahlweise wird die Trennwand, d.h. eine ihrer Querseiten mit dem Tubenkopf durch Kleben verbunden, während die andere Querseite mit der Verschlussnaht der Tube vereinigt wird. Durch die der Trennwand inhärenten quer- und /oder längswirkenden Federkräfte verspannt sich die Trennwand mit ihren Längsseiten gegen das Innere des Tubenrohres und, sofern keine Verklebung am Inneren des Tubenkopfes vorgesehen ist, zwischen Verschlussnaht und Tubenkopf.

Bei diesem Verfahren wird die Trennwand in das Innere einer vorgefertigten Tube montiert, eine Verfahrensweise, die nur schwierig zu automatisieren ist. Ferner sind besondere Mittel vorzusehen, die Trennwand nach Befüllung der Kammern, federvorgespannt mit der Verschlussnaht zu verbinden (US PS 3.877.520 to Dukess).

Bekannt geworden ist ein weiteres Montageverfahren, bei dem in eine vorgefertigte Tube eine Trennwand eingebracht wird, die sich ihren Längsseiten entlang vermittels Klappen gegen die innere Oberfläche des Tubenrohres verspannt. Zur Bildung der Klappen ist die Trennwand zu ihren Längskanten beabstandet, die für die Klappen als Scharniere wirken. Die Verspannung erfolgt dadurch, indem die Rückstellkraft (Memory) des Kunststoffes bzw. der Kunststoffe zur Bewegung der Klappen in Richtung auf die innere Oberfläche des Tubenrohres ausgenutzt wird. Dieses Verfahren hat den Nachteil, dass die Trennwand mit abgebogenen Klappen in die Tube einzufahren ist, was zu einer Komplizierung der Beschickungseinrichtung führt, die zufolge ihrer Funktionsweise der Ausbringung des Verfahrens (Anzahl montierte Tuben pro Zeiteinheit) Grenzen zieht (US PS 5.628.429 to Enamelon Inc.).

Ein bekanntes Formungsverfahren kennzeichnet sich dadurch, dass zunächst ein Kopf mit einer Trennwand gebildet und anschliessend der so ausgebildete Kopf mit einem Tubenrohr vereinigt wird. Nachteil dieses Verfahrens ist die gesamthaft aufwendige Automatisierung (GB PS 1.030.275 to Rosier).

Bekannt ist weiter ein Formungsverfahren, bei dem ein Tubenrohr mit Trennwand durch einen Wickelvorgang um einen Dorn mit Längsnahtschweissungen nach Abschluss des Wickelvorganges gebildet wird. Nachteil dieses Verfahren ist, dass sich durch den Wickelvorgang keine Trennwandabschnitte bilden lassen, die mit Schulter und/oder Ausguss eines Tubenkopfes in Eingriff bringbar wären. Dies wird dadurch ausgeglichen, indem vorfabrizierte Tubenköpfe die Teilungen aufweisen, mit denen Trennwände bei Verbindung des Tubenkopfes mit dem "Wickelrohr" in Anlage oder sonstwie in Verbindung zu bringen sind (US PS 3.948.704 to The Proctor und Gamble Comp.).

Die vorstehend umrissenen Montageverfahren gehen zu ihrer Durchführung zumeist von vorgefertigten Tuben (Kopf und Tubenrohr vereinigt) aus, während beim Formungsverfahren von einem vorgefertigten Tubenrohr und Kopf ausgegangen wird. Die Grundoperation beider Verfahren, nämlich Bildung einer Tube durch Anformung (Pressformen, Spritzgiessen) oder Anbringung (Fertigkopf) eines Tubenkopfes an ein Tubenrohr sind zu einem hohen technischen Stand entwickelt, der eine hohe Ausbringung an Tuben pro Zeiteinheit gewährleistet. Diese Ausbringung wird durch die Verfahrensschritte der Montage- und Formungsverfahren deutlich verringert, was in der weitgehenden Separierung letzteres Verfahren von der Grundoperation, d.h. Herstellung einer Tube aus Tubenrohr und Kopf liegt.

Bekannt ist ferner ein Formungsverfahren unter Verwendung einer Matrize und eines Dornes, bei dem der Dorn entweder mit einem mit einer Trennwand vormontierten Rohr oder einzeln mit Rohr und Trennwand beladen wird. Dieses Verfahren überlässt die Formung der Trennwand im Kopf dem Vorgang der Kopfbilding durch Spritzgiessen und es schmilzt die Trennwand im Rohr an die Trennwand im Kopf an. Diese Verbindungen haben sich als nicht ausreichend belastbar erwiesen (DE 196 40 833 C1, AISA Automation Industrielle SA).

Vor diesem Hintergrund liegt der Erfindung die Aufgabe zu Grunde, ein Verfahren zur Herstellung von Mehrkammertuben zu schaffen, das die Nachteile des Montage- und Formungsverfahrens vermeidet und diese Aufgabe wird vermittels eines Verfahrens mit den Merkmalen des Anspruches 1 gelöst.

Der Erfindung liegt zu Grunde einem den genannten Tubenfertigungsverfahren gemeinsamer Verfahrensschritt - Beladen eines Domes mit einem Tubenrohr - zu ergänzen bzw. vorzuschalten die Beladung eines Dornes mit einer vorgefertigten Trennwand. Die Beladung mit einer Trennwand kann wesentlich schneller vorgenommen werden als beim Montageverfahren die Einführung einer Trennwand in eine Tube oder beim Formungsverfahren die Verbindung eines vorgeformten Tubenrohres mit einem z.B. eine Trennwand des Rohres in den Kopf fortsetzend ausgebildeten Kopfes, wodurch sich das erfindungsgemässe Verfahren bezüglich seiner Ausbringung an Mehrkammertuben pro Zeiteinheit, der der Einkammertuben sehr nahe kommt, so dass mit dem Verfahren nach der Erfindung eine Mehrkammertube vergleichbar wirtschaftlich wie Einkammertuben zur fertigen sind.

Das erfindungsgemässe Vorgehen ist durchführbar, solange eine Matrize und ein Dorn die bestimmenden technischen Mittel zur Durchführung des Verfahrens sind. Bei den Kopfanformverfahren wirken Matrize und Dorn als Kopf bildende Form, indem in letztere flüssiger Kunststoff unter Druck eingespritzt (Spritzgiessen) oder eine bestimmte Menge plastifizierten Kunststoffes unter Druckentwicklung durch den Dorn zu einem Kopf ausgeformt wird (Pressformen). Da der Dorn in beiden Fällen das Tubenrohr und nach der Erfindung die Trennwand trägt, wird das Tubenrohr beim Bildungvorgang des Kopfes mit letzterem ebenso verbunden wie die in den Kopf hineinragende Trennwand, es sei denn, es wären Vorkehrungen ergriffen, die Trennwand nicht mit dem sich bildenden Kopf zu verbinden. Bei dem Verfahren der Kopfanbringung wirkt die Matrize bezüglich des Kopfes nicht formbildend, sondern als Aufnahme und Halterung eines ihrer Kontur im wesentlichen entsprechenden vorgefertigten Kopfes und Einrichtung zur Randaufschmelzung des Kopfes und/oder eines auf einen Dorn positionierten Rohrendes zu beider Verbindung. Auch in diesem Fall kann die Matrize örtlich begrenzt den Kopf und/ oder das Rohr mit Trennwand so aufschmelzen, dass Rohr und gewünschtenfalls Trennwand mit dem Kopf verbunden werden. Somit ist die Matrize bezüglich des erfindungsgemässen Verfahrens in ihrer Funktion nicht auf ein formgebendes Verfahrenselement beschränkt, sondern diese erstreckt sich auch auf Halterung und Aufheizung. Gleiches gilt für den Dom, der bei den Anformverfahren als Halterung- und Formgebungselement, bei dem Anbringungsverfahren als Halterung allein für Tubenrohr und Trennwand wirkt. Im Sinne der Erfindung und vor diesem Hintergrund sind Matrize und Dom für Anformungs- und Anbringungsverfahren funktional technische Äquivalente.

Mehrkammertuben können unabhängig davon, ob sie angeformte Köpfe besitzen oder mit Fertigköpfen ausgestattet sind bezüglich der Anordnung von Trennwänden innerhalb der Tube verschieden ausgebildet sein. Dabei wird davon ausgegangen, dass die Querseite einer Trennwand der Innenkontur eines Kopfes entspricht und mit letzterer in Eingriff steht. So kann die Trennwand an die Innenfläche angrenzen, wobei die Querseite auch so konturiert sein kann, dass ein Fortsatz als Wand die Ausgussöffnung des Kopfes durchgreift. Mit dieser Trennwandausgestaltung sind folgende Anordnungen (Befestigungsvarianten) einer Trennwand in einer Tube möglich und mit dem Verfahren nach der Erfindung ausführbar.
a) eine Trennwand ist weder mit Kopf noch Tubenrohr verbunden. Die Trennwand versperrt sich federnd gegen das Tubenrohr;
b) Verbindung der Querseite einer Trennwand mit dem Kopf, die Längsseiten der Trennwand bleiben mit der inneren Oberfläche des Tubenrohres unverbunden, jedoch vorgespannt oder nicht vorgespannt anliegend;
c) Die Querseite der Trennwand bleibt am Kopf anliegend aber unverbunden, die Längsseiten sind mit der inneren Oberfläche des Tubenrohres verbunden;
d) Die Querseite ist mit dem Tubenkopf, die Längsseiten sind mit der inneren Oberfläche des Tubenrohres verbunden.

Die Verbindung der Querseite einer Trennwand mit dem Kopf kann auf verschiedene Art und Weise durchgeführt werden. Beim Spritzgiessen wird die Querseite eingegossen, beim Pressformen wird die Querseite, d.h. jeweils ein Randstreifen der Querseite während der Bildung des Kopfes in den plastifizierten Kunststoff (PE) eingeformt. Wird eine Tube mit einem vorfabrizierten Tubenkopf ausgestattet, dann kann zur Verfestigung der Querseite an der inneren Oberfläche eine Verklebung oder eine mechanische Befestigung vorgesehen werden, z.B. in Form einer Nut, die die innere Oberfläche des Kopfes entlang läuft und in ein Randabschnitt der Querseite eingeschoben werden kann. Soll die Trennwand mit dem Kopf unverbunden bleiben, sind bei Anspritzung und Anformung Mittel vorzusehen, die die Randabschnitte der Querseiten gegenüber dem eingespritzten oder plastifizierten Kunststoffen abdecken. Mittel dafür könnten Scheiben sein, die die vordere Fläche eines Domes mit eingeschobener Trennwand, Randabschnitte und Schnittkanten abdecken. Bleiben Längsseiten der Trennwände mit der inneren Oberfläche unverbunden, so liegen sie an der inneren Oberfläche, gegen letztere Druck ausübend an. Dieser kann durch Gestaltung der Trennwand, z.B. im Querschnitt "S"-förmig und damit in Öffnungsrichtung der "S" förmigen Gestaltung federnd oder durch Memory-Effekt bedingte Rückstellkräfte beispielsweise gerundeter Flansche entlang den Längsseiten der wie Tuben aus Kunststoffen bestehenden Trennwände erzeugt werden. Die Verbindung der Längsseiten mit der inneren Oberfläche eines Tubenrohres kann durch Verklebung oder Verschweissung erfolgen, letztere unter Anwendung von Wärme und Druck. Dabei wird der Kunststoff der Trennwand, d.h. z.B. eines der Längsseite entlang laufenden Flansches und ggf. eines dem Flansch gegenüberliegenden Streifens entlang der inneren Oberfläche des Tubenrohres plastifziert oder aufgeschmolzen und Flansch und Streifen zusammengepresst.

Weitere Vorteile, Merkmale und Einzelheiten der Erfindung ergeben sich aus der folgenden Beschreibung eines bevorzugten Ausführungsbeispieles der Erfindung und der Zeichnung.

Beschrieben wird zunächst eine Ausführungsform einer Vorrichtung zur Durchführung des Verfahrens an der folgend ein bevorzugter Verfahrensablauf dargestellt wird. Es zeigen:
- Fig. 1:: eine Pressformmaschine in der Draufsicht mit auf einem Drehtisch angeordneten Werkzeugen jeweils acht Schrittstellungen durchlaufend.
- Fig. 2:: den Drehtisch mit einem der Werkzeuge teilweise im Schnitt in Schrittstellung 1 vor Beschickung des Dornes des Werkzeuges mit einem Tubenrohr und einer Trennwand.
- Fig. 3:: den Drehtisch mit einem der Werkzeuge teilweise im Schnitt in Schrittstellung 1 nach Beschickung des Domes des Werkzeuges mit einem Tubenrohr und einer Trennwand.
- Fig. 4:: den Drehtisch mit einem der Werkzeuge teilweise im Schnitt in Schrittstellung 2 mit beschicktem Dorn und nach oben offener Matrize unterhalb einer Befüllvorrichtung (Extruder).
- Fig. 5:: den Drehtisch mit einem der Werkzeuge teilweise im Schnitt in Schrittstellung 3 mit um 90° zur Horizontalen geschwenktem Dorn vor Einfahren in die nach oben offene mit einer Materialportion (nicht dargestellt) befüllten Matrize.
- Fig. 6:: eine Trennwand in der Draufsicht.

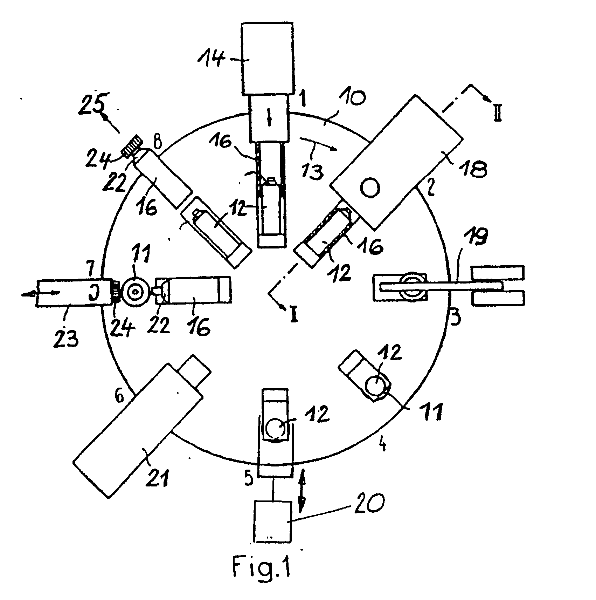

Fig. 1 zeigt den als Drehtisch 10 ausgebildeten Drehkörper in der Draufsicht. Auf dem Drehtisch 10 sind in Umfangsrichtung in gleichmässigen Abständen Matrizen 11 und Dorne 12 angeordnet, wobei jeder Matrize 11 ein Dorn 12 zugeordnet ist. Die Matrizen 11 sind nach oben gerichtet offen und die Dome 12 sind aus einer horizontalen Lage um einen Winkel von 90° in eine zu den jeweiligen Matrizen 11 gleichachsige vertikale Lage auf dem Drehtisch 10 schwenkbar angeordnet. In der gleichachsigen Lage sind die Dorne 12 axial verschiebbar, um die zugeordnete Matrize 11 schliessen und wieder öffnen zu können. Mit den Ziffern 1 bis 8 sind in der Fig. 1 beispielsweise acht Schrittstellungen angegeben, wobei der Drehtisch 10 um jeweils eine Schrittstellung in Pfeilrichtung 13 durch nicht dargestellte Mittel antreibbar ist.

Nachfolgend werden die acht Schrittstellungen, denen jeweils eine Station zugeordnet ist, im einzelnen beschrieben.

### Station 1

Durch eine Ladevorrichtung 14 wird der Dorn 12 zuerst mit einer Trennwand 15 und anschliessend mit einem vorgefertigten Tubenrohr 16 beschickt. Dabei wird die Trennwand 15 in einem Schlitz 17 des Domes 12 aufgenommen, wobei deren Flansche 45 an dem Dorn angeformt anliegen, so dass das Tubenrohr 16 über den Dom 12 und die Flansche 45, letztere enganliegend überfahrend, geschoben werden kann. Enganliegend bedeutet einen Abstand zwischen Flansch 45 und innerer Oberfläche des Domes von 0,05 mm bis 1.0 mm, vorzugsweise 0,4 bis 0,8 mm. Bei der Beschickung befindet sich der Dom 12 in einer horizontalen Lage, so dass die Beschickung in horizontaler Richtung erfolgt.

### Station 2

Der Station 2 ist ein feststehender Materialgeber 18 zugeordnet. Durch diesen Materialgeber 14 wird eine Portion (nicht dargestellt) plastifizierten Kunststoffes in die durch den Materialgeber 18 überdeckte nach oben offene Matrize 11 im freien Fall eingebracht. Eine andere Art der Beschickung kann darin bestehen, die Materialportion auf einen die Matrize in ihrer Längsrichtung (senkrecht) durchfahrenden Materialträger aufzubringen, der die Materialportion in die für sie bestimmte Position in der Matrize bringt. Die Lage und Darstellung der Matrize 11 ist in Stellung 7 verdeutlicht. Beim Weiterschalten von Stellung 2 auf Stellung 3 wird der Dorn 12 in die zur Matrize gleichachsige vertikale Lage geschwenkt.

### Station 3

Durch einen dieser Station 3 zugeordneten Kniehebel oder ein anderes Verriegelungsmittel 19 wird der Dorn 12 in der zur Matrize 11 gleichachsigen Lage in die Matrize 11 eingefahren, um die in Station 2 in die Matrize 11 eingebrachte Materialportion zu einem Tubenkopf zu verpressen, wobei dieser Tubenkopf an das Tubenrohr 16 und die Trennwand 15 (konturierte Querseite) an das Innere des Tubenkopfes und im Anschmelzbereich des Tubenrohres 16 an den Tubenkopf auch an das Innere des Tubenrohres 16 angeschmolzen wird. Durch nicht dargestellte Mittel wird der Dorn 12 in dieser Pressstellung gehalten, um darin zu verbleiben, wenn der Kniehebel 19 wieder zurückgezogen wird.

### Station 4

Der Dorn 12 verbleibt in der Pressstellung, damit der gepresste Tubenkopf mit angeschmolzenem Tubenrohr 16 und am Kopf angeschmolzener Trennwand 15 abkühlen und erhärten kann. Dazu werden Matrize 11 und Dorn 12 über nicht dargestellte Anschlüsse durch ein Kühlmittel gekühlt.

### Station 5

Der Dorn 12 bleibt zur Abkühlung weiterhin in der Pressstellung. In diese Station 5 kann bevorzugt eine induktiv wirkende Schweisseinrichtung 20 integriert sein, die die Flansche 45 nahe ihrer Längskanten der Trennwand 15 (Längsseiten) mit der inneren Oberfläche des Tubenrohres verbindet, d.h. verschweisst. Die Verschmelzung erfolgt, indem das Material, d.h. der Kunststoff nahe der Längskanten und eine diesen gegenüberliegende in Längsrichtung des Tubenrohres 16 verlaufende streifenförmige Zone aufgeschmolzen und vorzugsweise unter Druck in Eingriff d.h. aneinandergedrückt werden. Die Schweisseinrichtung 20 ist nicht auf dem Drehtisch 10, sondern wie die Ladevorrichtung 14 peripher getrennt zu letzteren angeordnet. Zur Vornahme einer Verschweissung fährt die Schweisseinrichtung 20 in Pfeilrichtung horizontal vor und bringt so Aufheiz- und Druckeinrichtungen in Arbeitsstellung.

### Station 6

Durch eine Rückziehvorrichtung 21 wird der Dorn 12 in axialer Richtung aus der Matrize 11 ausgefahren und damit wird das aus Matrize 11 und Dorn 12 bestehende Presswerkzeug (Matrize 11 und Dorn 12) wieder geöffnet, nachdem das ein Gewinde am Tubenkopf formende Matrizenteil 28 durch nicht gezeigte Mittel das geformte Gewinde freigesetzt hat, dies beispielsweise durch auseinanderfahren von Formbacken. Beim Weiterschalten von der Stellung 6 in die Stellung 7 wird der Dorn 12 mit Tubenrohr 16 angeformten Kopf und mit letzeren verbundener Trennwand 15 wieder in die horizontale Lage zurückgeschwenkt.

### Station 7

Durch eine dieser Station zugeordnete Aufschraubvorrichtung 23 wird ein Verschluss 24, d.h. eine Kappe 24 auf den Tubenkopf 22 aufgeschraubt, oder bei Steckkappen aufgestossen.

### Station 8

Die aus dem Tubenrohr 16, der Trennwand 15, dem Tubenkopf 22 und der Kappe 24 bestehende Tube ist nun fertiggestellt und wird in Pfeilrichtung 25 ausgeworfen oder durch eine nicht dargestellte Vorrichtung vom Dorn 12 abgezogen. Nach dem nächstfolgenden Taktschritt wird der Dorn 12 wieder mit einer Trennwand 15 und einem Tubenrohr 16 beladen.

Gemäss der in Fig. 1 dargestellten und vorgängig beschriebenen Vorrichtung umfasst das mit ihr ablaufende Verfahren acht Verfahrensschritte im Zusammenhang mit der Vorrichtung, Taktschritte eins bis acht genannt, wobei der Verfahrensschritt 7 (Aufbringung einer Kappe 24 auf den Tubenkopf 22) für die Durchführung des Verfahrens nach der Erfindung nicht zwingend ist. Obwohl im vorliegenden Ausführungsbeispiel acht Stationen, bei denen besagte acht Verfahrensschritte zur Umsetzung gelangen, angegeben sind, ist es auch möglich, die acht Verfahrensschritte auf eine andere Anzahl von Stationen kleiner acht oder grösser z.B. zehn Stationen zu verteilen. So könnte zwischen der Station acht und eins eine weitere Station mit einer Beladeeinrichtung vorgesehen sein, die den Dorn 12 vorgängig zur Beladung mit dem Tubenrohr 16 nur mit der Trennwand 15 bestückt. Ferner könnte eine weitere Station zwischen den Stationen 3 und 4, oder 4 und 5, oder 5 und 6 vorgesehen sein, an der die Trennwandlängsverschweissung vermittels der Schweisseinrichtung erfolgen könnte. Mit anderen Worten, alle im Zusammenhang mit Fig. 1 beschriebenen kombinierten Verfahrensschritte (Station 1, Beladung des Domes 12 mit Trennwand 15 und nachfolgend mit Tubenrohr 16; Station 5, Kühlung des angeformten Kopfes 22 bei gleichzeitiger Längskantenverschweissung) lassen sich bei entsprechender Anpassung der Anzahl Stationen vereinzeln. Es können aber auch weniger als acht Stationen vorgesehen sein, wenn Funktionen zur Herstellung einer Mehrkammertube zusammengefasst werden.

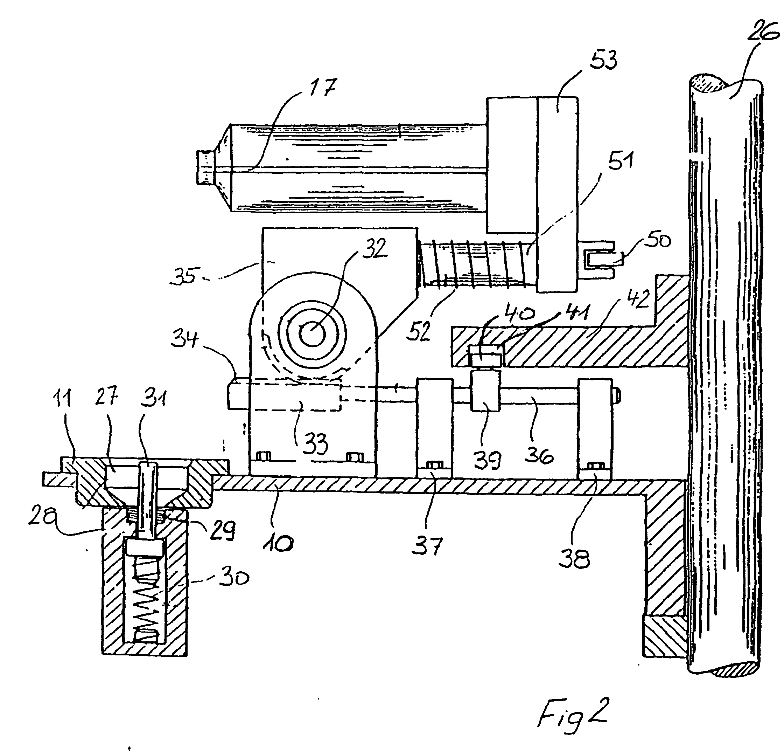

Fig. 2 zeigt den Drehtisch 10 mit einem der Werkzeuge teilweise im Schnitt in Schrittstellung 1, d.h. an Station 1 vor Beschickung des horizontal verlaufenden Dornes 12 mit Trennwand 15 und nachfolgend Tubenrohr 16. Mit 26 ist eine feststehende Welle bezeichnet, um welche der Drehtisch 10 drehbar gelagert und durch nicht gezeigte Mittel schrittweise antreibbar ist. In den Drehtisch 10 ist die den Formhohlraum 27 aufweisende Matrize 11 eingelassen und befestigt. Der Formhohlraum entspricht der äusseren Begrenzung des Tubenkopfes 22 (Fig. 1). Unterhalb der Matrize 11 und koaxial zu dieser befindet sich ein weiteres Matrizenteil 28, in welchem ein weiterer Formhohlraum 29 zur Bildung des Gewindes auf dem Tubenkopf 22 angeordnet ist. In dem weiteren Matrizenteil 28 ist ein durch eine Feder 30 in axialer Richtung belasteter Lochstempel 31 axial verschiebbar gelagert. Der Lochstempel 31 ist durch die Feder 30 in Richtung des Formhohlraumes 27 belastet und bei Einführung des Dornes 12 in die Matrize 11 entgegen der Kraft der Feder 30 zurückgedrängt. Der Lochstempel 31 dient zur Freihaltung der Tubenöffnung beim Pressen des Tubenkopfes 22. Das Matrizenteil 28 ist um eine weitere Achse drehbar, um das Gewinde des fertiggepressten Tubenkopfes freigeben zu können. Es wird hierzu durch nicht dargestellte Mittel gedreht, oder an Stelle einer Drehung durch andere (nicht gezeigte) Mittel geöffnet.

Der Dorn 12 ist um eine Achse 32 schwenkbar angeordnet. Zum Schwenken dient eine Schwenkeinrichtung beispielsweise umfassend eine Zahnstange 33, welche mit ihren Zähnen 34 in die Verzahnung eines Schwenkteiles 35 eingreift. Die Zahnstange 33 ist mit einem Stössel 36 verbunden, welcher in zwei auf dem Drehtisch 10 befestigten Lagerböcken 37, 38 axial verschiebbar gelagert ist. Zwischen den Lagerböcken 37, 38 ist der Stössel 36 mit einem Mitnehmer 39 starr verbunden, welcher eine Führungsrolle 40 aufweist, die in einer Führungsnut 41 einer wie die Welle 26 feststehenden Kurvenscheibe 42 geführt ist. Die Führungsnut 41 hat in der Kurvenscheibe 42 einen derartigen Verlauf, dass der Mitnehmer 39 zwischen den Lagerböcken 37, 38 hin und her bewegt wird, wodurch der Dorn 11 über die beschriebenen Mittel in vertikale oder horizontale Lage geschwenkt wird.

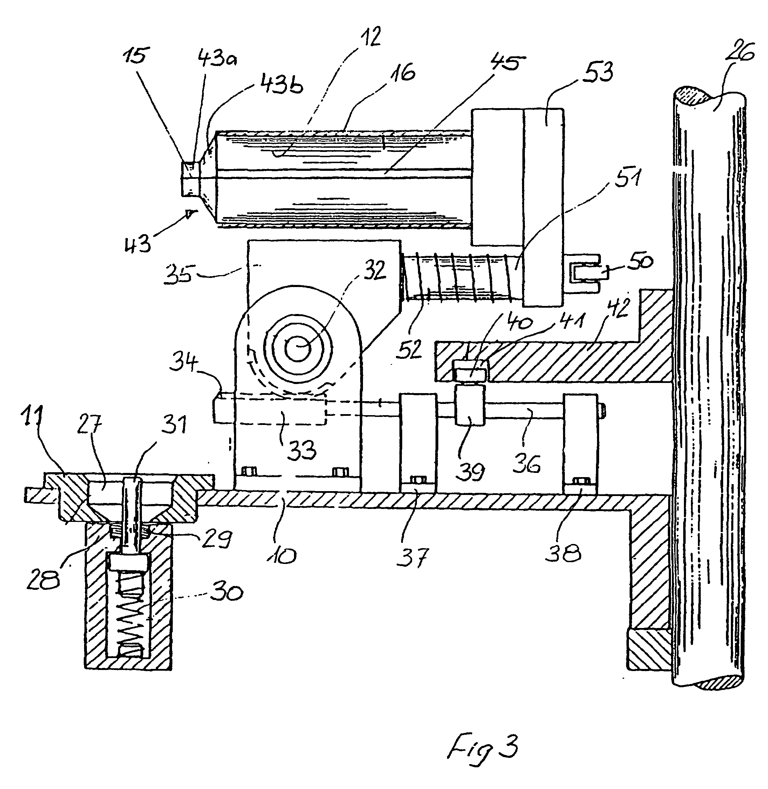

Der in Fig. 3 dargestellte Dorn 12 ist an seinem vorderen freien Ende 43 so ausgestaltet, dass das freie Ende 43 (Stirnfläche des Domes) die innere Kontur eines Tubenkopfes 22 bilden kann. Dabei bildet der Ansatz 43a die Durchflussöffnung des Ausgusses des Tubenkopfes 22 während die sich daran anschliessende Schräge 43b die innere Fläche der Schulter des Tubenkopfes 22 formt.

Zur Aufnahme einer Trennwand 15 durchgreift ein Schlitz 17 in axialer Richtung den Dom 12 und zwar ausgehend von der vorderen freien Stirnfläche des Ansatzes 43a in einer Erstreckung, die der Länge einer Trennwand 15 entspricht. In diesem Schlitz 17 wird die Trennwand 15 durch die Ladevorrichtung 14 eingeschoben.

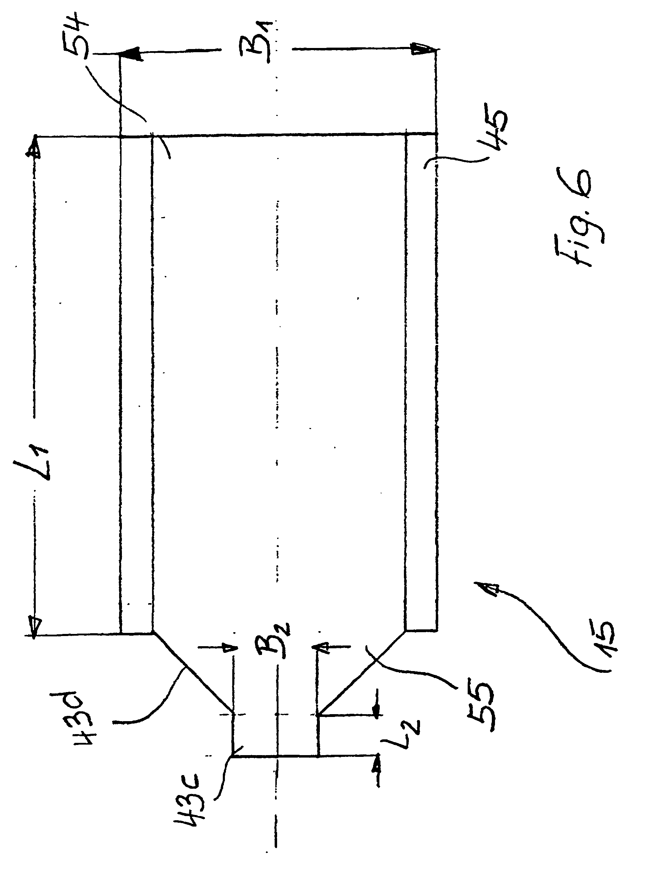

Fig. 3 zeigt den Drehtisch 10 mit einem der Werkzeuge teilweise im Schnitt in Schrittstellung 1, d.h. in Station 1 im Gegensatz zu Fig. 2 jedoch nach der Beschickung des nach wie vor horizontal liegenden Domes 12 mit einer Trennwand 15 und einem Tubenrohr 16. Der Zuschnitt (Fig. 6) einer Trennwand 15 ist vorzugsweise so vorgenommen, dass er einends in seiner äusseren Formgebung dem vorderen freien Ende 43 des Domes 12 (Konturierung der Querseite), und daran anschliessend in seiner Breite mindestens dem halben Umfang des Domes und in seiner Länge der Länge einer Tube vorzugsweise ausgehend vom vorderen freien Ende des Ansatzes 43a entspricht, wobei der beidseitige Überstand der Trennwand an den Dorn angelegt ist. Damit ist die Trennwand 15 vollständig und bezüglich der Überstände konturgleich zur Oberfläche des Dornes 12 im Dorn 12 aufgenommen. Die konturgleiche und massgleiche Bemessung des Kopfteiles der Trennwand 15 und deren Aufnahme im Dom 12 ist ausreichend, die äusseren Kanten des vorderen Endes der Trennwand 15 (Kopfteil) mit der inneren Oberfläche der Ausgussöffnung und der Innenfläche der Schulter des Kopfes 22 bei Bildung des Kopfes 22 mit letzterem zu verschmelzen. Gleichermassen ist die Bemessung der sich an das vordere freie Ende der Trennwand 15 (Querseite) anschliessenden Längsseiten der Trennwand 15 ausreichend, mit der inneren Oberfläche des Rohres 22 zu verbinden, und zwar so zu verbinden, dass die Trennwand 15 bei Flachdrücken der Tube ca. der Breite der Tube entspricht. Die Flansche 45 werden also so angeschweisst, dass jeder Flansch 45 für die Trennwand 15 eine Vorrats- oder Ausgleichsfläche bildet, um den Trennwandflächen-Mehrbedarf bei Flachdrücken der Tube zu befriedigen.

In Fig. 6 sind die Überstände der Trennwand als Flansche 45 bezeichnet, die eine streifenförmige Längsnaht-Verschweissung gestatten. Diese Flansche sind beidseits der Trennwand 15 (entsprechend dem Dorndurchmesser) abgebogen, liegen an der inneren Oberfläche des Tubenrohres 22 an und weisen jeweils eine Breite gebildet aus der Hälfte der Differenz zwischen dem halben Umfang der Tube und dem Dorndurchmesser auf, vorzugsweise vergrössert um 5% bis 25%, vorzugsweise 8% bis 12% der Breite. In Fig. 3 sind gleiche Teile wie in Fig. 2 mit gleichen Bezugszahlen gekennzeichnet.

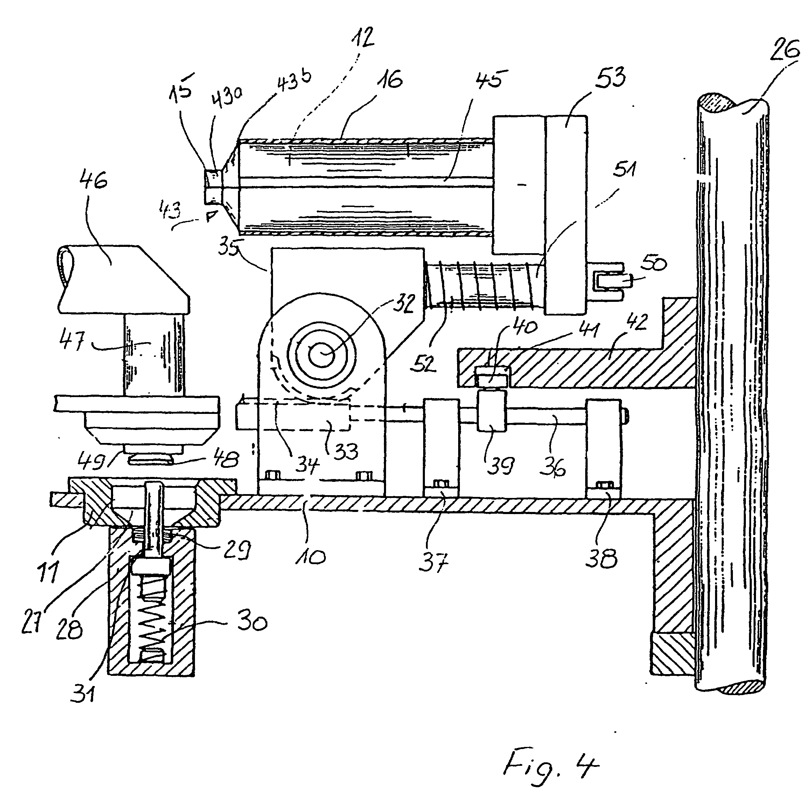

Fig. 4 zeigt den Drehtisch 10 mit einem der Werkzeuge teilweise im Schnitt in Schrittstellung 2, d.h. an Station 2 mit beschicktem horizontal liegendem Dorn 12 und nach oben offener Matrize 11 unterhalb eines Extruders 46 als Befüllvorrichtung. Der Extruder 46 ist ortsfest der Station 2 zugeordnet. Er weist ein Rohrteil 47 auf, in dem sich ein Schliesskörper 48 befindet. Der Schliesskörper 48 ist als Ventilkegel ausgebildet und durch nicht dargestellte Mittel zum Öffnen und Schliessen in axialer Richtung verschiebbar angeordnet. Das Rohrteil 47 ist von einer Ringdüse 49 umgeben, die zur Erzeugung eines Gasstromes bestimmt ist. Zur Befüllung der Matrize 11 extrudiert der Extruder 46 eine Materialportion (nicht gezeigt) plastifizierten Kunststoffes.

Der aus dem Rohrteil 47 den Schliesskörper 48 anströmende Kunststoffstrom wird durch den Schliesskörper 48 zu einem Ring, d.h. einer ringförmigen Materialportion, runden bis linsenförmigen Querschnittes, geformt. Durch Schliessen des Schliesskörpers 48 wird die Portion vom Extruder abgetrennt und fällt in freiem Fall in den Formhohlraum der Matrize oder auf eine Formplatte (nicht gezeigt) zum Einfahren der Portion. Vermittels der Ringdüse 49 kann auf die Portion ein Gasstrom aufgebracht werden, der die Trennung der Materialportion vom Extruder bei in Schliessstellung gefahrenen Schliesskörper 48 unterstützt. Diese Art Beschickungen haben sich als vorteilhaft erwiesen, da mit ihr nach Befüllung der Matrize 11 und vor Einsetzen des Pressvorganges örtlich begrenzte Kristallisierungen des plastifizierten Kunststoffes vermeiden lassen, die anderenfalls zu Defekten des geformten Kopfes 22, der Anformung des Rohres 16 an den Kopf 22 oder der Verbindung der Trennwand 15 mit dem Kopf 22 führen können. Im übrigen sind in Fig. 4 gleiche Teile wie in Fig. 2 und 3 mit gleichem Bezugszeichen gekennzeichnet.

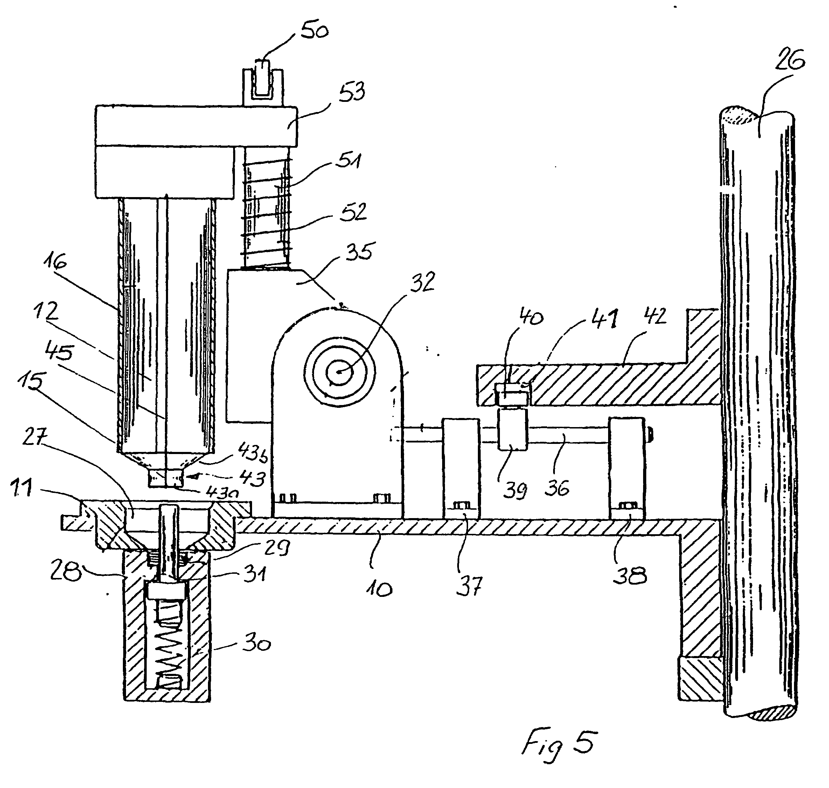

Fig. 5 zeigt den Drehtisch 10 mit einem der Werkzeuge teilweise im Schnitt in Schrittstellung 3, d.h. an Station 3. Der beladene Dorn 12 ist um 90° zur Horizontalen geschwenkt und in dieser Stellung zur Einfahrt in die befüllte Matrize ausgerichtet. Die Einfahrbewegung des Domes 12 in die Matrize 11 wird ausgelöst durch einen Kniehebel 19 (siehe auch Station 3 in Fig. 1) der auf eine Rolle 50 eines im Schwenkteil 35 axial geführten Schaftes 51 drückt und letzteren im Schwenkteil 35 gegen die Kraft der Feder 52 in Richtung auf die Matrize 11 verschiebt. An den Schaft 51 ist vermittels eines Dornträgers 53 der Dorn 12 angeordnet, so dass bei Verschiebung des Schaftes 51 der beladene Dorn 12 in die Matrize 11, den Pressvorgang vollziehend einfährt. Auch in Fig. 5 sind gleiche Teile wie in Fig. 2, 3 und 4 mit gleichem Bezugszeichen versehen.

Fig. 6 zeigt eine Trennwand 15 in der Draufsicht. Die Trennwand 15 umfasst ein im wesentlichen rechteckiges erstes Teilstück 54, das in seiner Breite B1 bei einer Zweikammertube gleicher Kammerabmessungen im wesentlichen dem Durchmesser einer Tube plus die der Überstände (Flansche 45), und in seiner Länge L1 im wesentlichen der Länge des Tubenrohres 16 entspricht. An dieses Teilstück 54 schliesst sich einends ein zweites Teilstück 55 an, das in seiner Formgebung im wesentlichen der inneren Form eines Tubenkopfes entspricht. So korrespondiert der Ansatz 43c mit der Bemessung des Ansatzes 43a und die Schräge 43d mit der der Schräge 43b, Ansatz 43a und 43b sind Formflächen des vorderen freien Endes 43 des Domes 12 (Fig. 3). Die Länge L2 des Ansatzes 43c entspricht im wesentlichen der Länge einer Ausgussöffnung, während die Breite B2 deren Durchmesser entspricht. In den Schlitz 17 eines Dornes 12 eingeschoben liegt die dem Teilstück 55 gegenüberliegende Seite der Trennwand 15 am Schlitzende an, während die Flansche 45 der Trennwand 15 im wesentlichen durch Anformung an der Oberfläche des Domes 12 anliegen.

Mit Anwendung von Flanschen 45 verbreitert um die genannten Werte und Anbringung der Schweißnähte nahe ihrer Längskanten sind zwischen Flansch 45 und dem Inneren von Tubenrohr 16 breitere und damit belastbarere Schweissnähte ausbildbar als dies mit der Verschweissung nicht verbreiterter Flansche bei gleicher Schweissnahtlage möglich wäre. Zum Einbau in eine Tube, d.h. in ein Tubenrohr 16 sind die Flansche 45 vorzugsweise in einer Drehrichtung entlang den Längskanten des Teilstückes 54 so abgebogen, dass sie bei Einschieben der Trennwand 15 in den Schlitz 17 des Domes 12 an der äusseren Oberfläche des Domes 12 anliegen, so dass das Tubenrohr 16 die Flansche 45 überfahrend auf den Dorn 12 aufgebracht werden kann. Während die Trennwand 15 im Dorn 12 aufgenommen ist, befinden sich die Flansche 45 zwischen äusserer Oberfläche des Domes 12 und innerer Oberfläche des Tubenrohres 16. Vorgesehen ist beispielsweise, die Verschweissung an einer Abkühlstation für den Kopf 22 mit angeschmolzenem zweiten Teilstück 55 vorzunehmen (Station 5). Die Verschweissung erfolgt durch induktiv erzeugte Wärmeentwicklung und Aufschmelzung des Rohr- und Flanschwerkstoffes in Streifenform bei gleichzeitiger oder anschliessender Verpressung der Streifen. Zu diesem Zweck sind bei Schweisseinrichtungen die Aufheizeinrichtungen mit Presseinrichtungen kombiniert oder letztere sind Aufheizeinrichtungen nachgeordnet, wobei Kühleinrichtungen nachfolgend vorgesehen sein können, beispielsweise durch Anblasen der Nähte mit Luft. Entwickeln die Flansche 45 beispielsweise bei Erwärmung eine gewisse Rückstellkraft, d.h. drücken sie von sich aus auf die innere Oberfläche des Tubenrohres 16, so kann dies ausreichend sein, zur Herstellung einer Schweissnaht den Pressvorgang vermittels gesondertem Werkzeug dahinfallen zu lassen. Auf Grund der Abbiegung der Flansche 45 zur Anlage an den Dorn 12 im Uhrzeiger- oder entgegen dem Uhrzeigersinn zufolge ihrer Breitenbemessung und der vorgesehenen Schweissnahtlage (nahe der Längskanten der Flansche) ergibt sich, dass die Schweissnähte - wieder im Sinn der Abbiegungsrichtung - beidseits unter einem Winkel zum Schlitz 17 zur Aufnahme der Trennwand 15 bzw. zur Längsachse des Dornes 12 stehen. Für die Funktionssicherheit von Tuben hat sich als vorteilhaft erwiesen, wenn die beidseitigen Winkel gleich gross mit einer Abweichung von höchstens 0,5 Grad bis 1,5 Grad, vorzugsweise 0,6 bis 0,9 Grad, ausgebildet sind.

Als Werkstoffe zur Herstellung der Tubenrohre kommen Kunststoff-Monofolien (Folien einschichtig aus einem Kunststoff bestehend), Kunststoff-Laminatfolien (Folien aus mindestens zwei Kunststoffschichten) oder Metallaminatfolien (Metallfolie beidseits kaschiert mit einer oder mehreren Kunststoffolien) in Betracht. Die äusseren Schichten sind bei Kunststoff- und Metallaminatfolien meist aus Polyethylen, die sich gut gegeneinander verschweissen lassen. Polyethylen eignet sich auch zum Anformen des Kopfes 22 an ein Ende des Tubenrohres 16, da sich Polyethylen gleichermassen gut zum Spritz- wie Pressformen eignet. Bei der Materialwahl für das Tubenrohr ist auf seine Diffusionsresistenz bei höherwertigen Packgütern zu achten. Zur Erfüllung dieses Erfordernisses kann der Kopf aussen und / oder innen mit einer Sperrschicht belegt sein. Bevorzugt besteht die Trennwand 15 aus einem Kunststoff, der mit dem Kunststoff der inneren Oberfläche des Tubenrohres 16 gut verschweissbar ist. Beispielsweise besteht die innere Oberfläche des Rohres 16 aus Polyethylen, sie ist vorteilhaft, wenn auch die Trennwand aus einer Polyethylen-Folie besteht. Ist eine Diffusion besonderer Packstoffkomponenten von einer Tubenkammer in die andere zu unterdrücken, kann die Trennwand auch aus einem diffusionsresistenten Material, z.B. einem Metallaminat gefertigt sein. Vorzugsweise werden für die genannten Zwecke solche mit einer Dicke von 250µ bis 350µ vorzugsweise 290µ bis 310µ verwendet.

Das erfindungsgemässe Verfahren (Anformung des Kopfes durch *Formgebung flüssigen plastifizierten Kunststoffes)* zur Herstellung einer Mehrkammertube läuft in vorstehend beispielhalber beschriebener Vorrichtung folgendermassen ab. In Station 1 belädt die Ladevorrichtung 14 den Dorn 12 zuerst mit einer Trennwand 15 und anschliessend mit einem Tubenrohr 16. Die Trennwand 15 wird beim Beladevorgang in den Schlitz 17 des Dornes 12 eingebracht, woraufhin das Tubenrohr 16 über den Dom 12 geschoben wird. Nach erfolgtem Beladevorgang wird die Matrize 11 des Werkzeuges in Station 2 mit plastifiziertem Kunststoff in einer Menge befüllt, die der zur Bildung des Tubenkopfes 22 notwendigen Materialmenge entspricht. In Station 3 wird der Pressvorgang zur Bildung des Kopfes 22 durch Einfahren des Dornes 12 in die Matrize 11 vollzogen, gleichzeitig wird ein vorderes Ende des Tubenrohres 16 an den äusseren Umfang des Kopfes 22 und das Teilstück 55 (d.h. das in das Innere des Kopfes hineinragende Ende der Trennwand 15, d.h. Randabschnitt) an das Innere des Tubenkopfes 22 angeschmolzen. Mit dieser Massnahme ist nicht nur der Schulterraum des Kopfes sondern auch die Ausgussöffnung des Ausgusses des Kopfes 22 vermittels einer Wandung geteilt. Nach der Pressformung erfolgt die Abkühlung des Kopfes mit angeschmolzenem Trennwandende (Teilstück 55). Die Abkühlung kann über mehrere Stationen erfolgen. Die Abkühlungszeit wird benutzt, um die Trennwand 15 beispielsweise vermittels der Flansche 45 in Längsrichtung mit dem inneren Umfang des Tubenrohres 16 zu verschweissen. Grundsätzlich stellt das erfindungsgemässe Verfahren darauf ab
1.) den Beladevorgang des Domes 12 mit der Trennwand 15 und Tubenrohr 16 zu kombinieren; subsidiär
2.) Abkühlzeiten für den Vorgang der Längsverschweissung der Trennwand 15 mit dem Tubenrohr 16 zu nutzen
so dass die gesamte Fertigungszeit für eine Mehrkammergegenüber einer Einkammertube nicht verlängert wird.

Nach erfolgter Abkühlung und Verschweissung beispielsweise in einer Station 5 wird in einer folgenden Station 6 das Werkzeug aufgefahren und der Dorn 12 mit darauf sitzender Tube in eine Lage gebracht, dass auf den Kopf 22 der Tube vermittels einer Aufschraubeinrichtung 23 eine Verschlusskappe 24, beispielsweise in einer Station 7, aufgebracht werden kann. Danach wird in einer Station 8 der Dorn 12 von der Tube entladen und anschliessend rückt das Werkzeug wieder in Station 1, d.h. in die Ausgangsstation zur Beladung des Domes 12 ein.

Das erfindungsgemässe Verfahren wurde im Zusammenhang mit vorstehend beschriebener Vorrichtung beispielshalber erläutert. Die Durchführung des Verfahrens nach der Erfindung ist jedoch auf diese Vorrichtung nicht beschränkt. Zur Durchführung des Verfahrens nach der Erfindung ist grundsätzlich jede Vorrichtung geeignet, solange mit ihr die beanspruchten Verfahrensschritte durchführbar sind.

Ist als Produkt eine Tube mit Trennwand angestrebt, deren Längsseiten nicht mit der inneren Oberfläche verbunden ist, so kann bei vorstehend beschriebener Vorrichtung der erfindungsgemässe Verfahrensablauf bei sonst gleichen Verfahrensschritten durch Stillsetzung der Schweisseinrichtung 20 (Station 5) entsprechend geändert werden. Ist nur eine Längsseitenverschweissung ohne Verschweissung der Trennwand mit der Kopfinnenfläche, so kann in Station 1 die Beladung des Domes mit Trennwand und Rohrkörper ergänzt werden, um eine Scheibe (nicht gezeigt), die das vordere freie Ende 43 des Domes 12 abdeckt, so dass eingespritzter Kunststoff oder die Menge (Portion) plastifizierten Kunststoffes daran gehindert wird, die entsprechenden Kanten der Trennwand zu umfliessen (Station 2). Ansonsten kann das Verfahren wie im Falle der Vollverschweissung (Verbindung der Trennwand mit Kopf und innerer Oberfläche des Tubenrohres) oder der ersten Art Teilverschweissung (Verbindung der Trennwand nur mit der Kopfinnenkontur) bei dieser zweiten Art Teilverschweissung (Verbindung der Längsseiten nur mit der inneren Oberfläche des Tubenrohres) ablaufen.

Wird Vorrichtung und Verfahren nach der Erfindung vermittels des Verfahrensschrittes Spritzgiessen betrieben, so ist Stufe 2 (Beschicken der Matrize mit einer Portion plastifizierten Kunststoffes stillgelegt. Dafür wird in Station 3 flüssiger Kunststoff in eine geschlossene Form (Matrize und Patrize je eine Formhälfte bildend eingespritzt. Beladung des Domes, Vollverschweissung, erste und zweite Art Teilverschweissung erfolgt wie im Zusammenhang mit der Pressformung des Kopfes beschrieben. Bei der Kopfanbringung wird der Dorn wie bereits mit dem Kopfbildungsverfahren beschrieben beladen. In Station 2 wird ein vorfabrizierter Kopf in die Matrize - in diesem Fall nicht als formendes Element sondern als Halterung oder Aufnahme dienend eingebracht. An Station 3 fährt der Dorn 12 in die Matrize ein. Eine in die Matrize ggf. auch in die Patrize eingebrachte Aufheizeinrichtung, erweicht oder verflüssigt den Kunststoff eines Randabschnittes des Tubenrohres und/oder Umfangsrandabschnittes soweit, dass letztere zur Verbindung von Kopf und Tubenrohr ineinanderfliessen. Grundsätzlich ist es möglich, die Trennwandquerseite durch Aufschmelzen mit dem Kopfinneren zu verbinden. Bevorzugt ist aber eine mechanische Verbindung, d.h. Einbringung eines Randabschnittes der Trennwandquerseite in eine Nut auf der Kopffinnenseite (erste Art Teilverbindung). Bei einer Vollverbindung sind Querseiten der Trennwände mechanisch mit den Köpfen, die Längsseiten durch Schweissen (Wärme, Druck Station 5) mit den inneren Oberflächen der Tubenrohre verbunden. Bei einer zweiten Art Teilverbindung, kann von der Einführung der Trennwandquerseite Abstand genommen und nur die Schweissung der Längsseiten (Station 5) vorgenommen werden.

## Patentansprüche

1. Verfahren zur Herstellung einer Mehrkammer-Verpackungstube aus Kunststoff, die Tube bestehend aus einem Tubenrohr, einem Schulter und Ausguss mit inneren und äusseren Oberflächen umfassenden Tubenkopf und mindestens einer im Tubenrohr aufgenommenen Trennwand, umfassend ein erstes Teilstück, deren eine Querseite mit der inneren Oberfläche der Schulter verbunden ist, bei dem der Tubenkopf vermittels eines Werkzeuges bestehend aus einer die äussere Oberfläche des Tubenkopfes bildenden Matrize und einem die innere Oberfläche des Tubenkopfes bildenden, das Tubenrohr und die Trennwand tragenden Dorn als Werkzeughälften aus aufgeschmolzenem Kunststoff durch Spritzgiessen angeformt wird, **dadurch gekennzeichnet, dass** die Trennwand (15) mit einem zweiten Teilstück (55), das in seiner Formgebung im wesentlichen der inneren Formgebung des Tubenkopfes (22) entspricht, während des Formgebungs-vorganges des Tubenkopfes (22) an dessen innere Oberflächen angeformt wird.

2. Verfahren nach Anspruch 1, **dadurch gekennzeichnet, dass** die Längsseiten der Trennwand mit der inneren Oberfläche des Tubenrohres verbunden werden.

3. Verfahren nach Anspruch 1, **dadurch gekennzeichnet, dass** der Tubenkopf als vorgefertigter Tubenkopf am Tubenrohr angebracht wird.

4. Verfahren nach Anspruch 3, **dadurch gekennzeichnet, dass** eine Querseite der Trennwand mechanisch mit dem vorgefertigten Tubenkopf in eine Nut eingreifend verbunden wird.

5. Verfahren nach einem der Ansprüche 1 - 4, **dadurch gekennzeichnet, dass** der Dorn mit einem Tubenrohr und anschliessend mit einer Trennwand beschickt wird.

## Claims

1. A process for the production of a multi-chamber packaging tube of plastic material, the tube comprising a tube body portion, a tube head with inner and outer surfaces consisting of a shoulder and outlet and one separating wall accomodated in the tube body portion having a first part the transverse side of which is connected to the inner surface of the head whereby the tube head is formed by means of a tool, comprising a female tool portion forming the outer surface of the head and a male tool portion forming the inner surface of the head, the male tool portion carrying the tube body portion and the separating wall whereby the forming is effected by injection molding of liquified plastic material, **characterised thereby that** the separating wall (15) with a second part (55), the form of which essentially corresponding with the inner form of the tube head (22) is connected to the inner surface of the tube head (22) during the forming process of the tube head (22).

2. A process according to claim 1, **characterised that** the longitudinal sides of the separating wall are connected to the inner surface of the tube body portion.

3. A process according to claim 1, **characterised thereby that** the tube head is connected to the tube body portion as a prefabricated tube head.

4. Process according to claim 3, **characterised thereby that** the separating wall has a transverse side mechanically connected to the prefabricated tube head by engaging into a groove.

5. Process according to one of the claims 1 to 4, **characterised thereby that** the male tool portion is first loaded with a tube body portion and thereafter with a separating wall.

## Revendications

1. Procédé de fabrication d'un tube d'emballage en matière plastique à plusieurs cellules, le tube étant formé par un corps de tube, une tête de tube, munie d'un épaulement et d'un bec de sortie avec des surfaces intérieure et extérieure, et au moins une cloison, logée dans le corps de tube et comportant un premier tronçon partiel, dont une face transversale est assemblée à la surface intérieure de l'épaulement, dans lequel procédé la tête de tube est formée à partir d'une matière plastique en fusion par moulage par injection au moyen d'un moule formé par une matrice, formant la surface extérieure de la tête de tube, et par un mandrin, formant la surface intérieure de la tête de tube et portant le corps de tube et la cloison, lesquels constituent des demi-moules, **caractérisé en ce que** la cloison (15) avec un deuxième tronçon partiel (55), qui correspond par sa forme sensiblement à la forme intérieure de la tête de tube (22), est formée contre les surfaces intérieures de la tête de tube (22) pendant le processus de formage de celle-ci.

2. Procédé selon la revendication 1, **caractérisé en ce que** les côtés longitudinaux de la cloison sont assemblés avec la surface intérieure du corps de tube.

3. Procédé selon la revendication 1, **caractérisé en ce que** la tête de tube est montée sous forme de tête préfabriquée contre le corps de tube.

4. Procédé selon la revendication 3, **caractérisé en ce qu'**un côté transversal de la cloison est assemblé mécaniquement, par engagement dans une rainure, avec la tête de tube préfabriquée.

5. Procédé selon l'une quelconque des revendications 1 à 4, **caractérisé en ce qu'**un corps de tube et ensuite une cloison sont posés sur le mandrin.
